# EUROPEAN PATENT SPECIFICATION

(11) **EP 3 325 252 B1**
(45) Date of publication and mention of the grant of the patent: **15.05.2019**
(21) Application number: 16766366.5
(22) Date of filing: 27.07.2016
(51) Int. Cl.: B29C 64/118, B29C 64/241, B29C 64/232, B29C 64/236, B29C 64/20, B33Y 30/00

(54) **ADDITIVE MANUFACTURING DEVICE TO OBTAIN A THREE-DIMENSIONAL OBJECT**
VORRICHTUNG ZUR GENERATIVEN FERTIGUNG ZUR HERSTELLUNG EINES DREIDIMENSIONALEN OBJEKTS
DISPOSITIF DE FABRICATION ADDITIVE POUR OBTENIR UN OBJET TRIDIMENSIONNEL

(30) Priority: 24.07.2015 IT UB20153684
(43) Date of publication of application: 30.05.2018
(73) Proprietor: Universita Degli Studi di Trieste, 34127 Trieste (IT)
(72) Inventor: SERIANI, Stefano, 34139 Trieste (IT)
(74) Representative: Petraz, Davide Luigi
(86) International application number: PCT/IB2016/054484
(87) International publication number: WO 2017/017622

(56) References cited:
- WO-A2-2015/065936
- CN-A- 104 525 947
- CN-U- 204 196 264
- US-A1- 2014 054 817
- US-A1- 2015 183 167

## Description

### FIELD OF THE INVENTION

Embodiments described here concern an additive manufacturing device to obtain three-dimensional objects, in particular using Fused Deposition Modeling technology. Embodiments described here also concern an additive manufacturing method using said device.

### BACKGROUND OF THE INVENTION

Additive manufacturing devices to obtain three-dimensional objects are also known by the term 3D printers. 3D printers using Fused Deposition Modeling (FDM) technology are particularly interesting, where the nozzle deposits successive layers of extruded thermoplastic filaments. This technology allows to create intricate weaves, and therefore enables the production of objects shaped as the designer desires. FDM technology 3D printers comprise a printing nozzle fed from a source with thermoplastic printing material and a guide system to translate the nozzle along rectilinear axes, typically along three orthogonal Cartesian axes X, Y, Z. A control unit is connected to the guide system and to the nozzle; a user designs the object he intends to create and consequently programs the control unit. The 3D printer automatically manufactures the designed object. In particular, during the movement set by the control unit using the guide system, the nozzle deposits successive layers of filaments one on top of the other on a support surface, according to the shape of the object to be made. In this technique, the final object is thus formed by a multitude of thin, overlapping sections. Each section adheres to the next one due to the effect of the melting area; the section is deposited at high temperature, therefore the section being printed is very hot when it enters into contact with the previous one already deposited; in this way the melting area is formed, which guarantees cohesion between the two sections.

It has been seen that known techniques allow to print three-dimensional objects of any shape, but their mechanical properties are only moderate. Objects printed using the technology indicated above can be used only for functions of display or for esthetic purposes. On the contrary, for other purposes where reliable structural characteristics are required, they may not be adequate.

Document CN-A-104525947 describes an additive manufacturing device of a known type, in accordance with the preamble of claim 1.

Therefore, the main task of the present invention is to provide an additive manufacturing device that allows to overcome the limits of the state of the art. Within this framework, a first purpose of the present invention is to obtain an additive manufacturing device that allows to make three-dimensional objects with mechanical properties higher than those that can currently be obtained. A second specific purpose of the present invention is to obtain an additive manufacturing device that is reliable and easy to manufacture at competitive costs.

Other limitations and disadvantages of conventional solutions and technologies will be clear to a person skilled in the field after reading the remaining part of the present description with reference to the drawings and the description of the embodiments that follow, although it is clear that the description of the state of the art connected to the present description must not be considered an admission that what is described here is already known from the state of the prior art.

### SUMMARY OF THE INVENTION

The present invention is set forth and characterized in the independent claims, while the dependent claims describe other characteristics of the invention or variants to the main inventive idea.

In accordance with the invention, an additive manufacturing device to obtain three-dimensional objects is therefore provided. In accordance with one embodiment, the device comprises a printer extruder configured to print a filament, and a guide unit configured to translate the extruder along one or more reference axes. The device also comprises a support rotatable around a rotation axis and able to support the three-dimensional object. According to one embodiment, the guide unit is also configured to rotate the extruder around one or more rotation axes.

As well as obtaining a deposition of material according to parallel planes, the device according to the invention advantageously allows to deposit filaments in directions inclined with respect to the support plane of the support, that is, inclined with respect to the sections of material already deposited. This operative mode allows to obtain three-dimensional objects with higher mechanical properties than those obtained with traditional techniques since the deposition of inclined filaments advantageously reinforces the structure in parallel planes.

In accordance with the invention, the guide unit comprises rotation means configured to rotate said extruder around at least a first rotation axis substantially orthogonal to a reference plane defined by two axes, each parallel to one of said translation axes.

In accordance with the invention, the rotation means are also configured to rotate said extruder around a second rotation axis, substantially orthogonal to said first rotation axis.

In accordance with other embodiments, an additive manufacturing method is provided to obtain a three-dimensional object of predetermined shape using a device according to the present description. In accordance with one embodiment, the method comprises the steps of:
a) providing a central portion of the three-dimensional object by overlapping layers of extruded material;
b) providing a side portion of the three-dimensional object by depositing overlapped interwoven layers on a side surface of the central portion.

In accordance with possible embodiments, the said above method provides to make available a print extruder configured to print a filament. In accordance with some embodiments of the method, step a) provides to translate the extruder along one or more reference axes by means of a guide unit and to rotate a support, which defines a support plane for the three-dimensional object, around a rotation axis substantially orthogonal to the support plane, while step b) provides to rotate the extruder by means of the guide unit around at least a first rotation axis substantially orthogonal to a reference plane defined by two axes each parallel to one of the translation axes and around a second translation axis substantially orthogonal to the first rotation axis.

Other advantageous technical characteristics of the embodiments in accordance with the present description are described in the dependent claims.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

### BRIEF DESCRIPTION OF THE DRAWINGS

The invention will be more clear in light of the drawings supporting the description of example embodiments, wherein:
- fig. 1 shows a device according to some embodiments in a first operating condition;
- fig. 2 shows the device in fig. 1 in a second operating condition;
- fig. 3 shows another view of the device in the operating condition of fig. 2;
- fig. 4 shows some components of a device according to embodiments;
- fig. 5 shows a perspective view of other components of a device according to embodiments;
- figs. 6a and 6b are schematic views relating to an additive manufacturing method using a device according to embodiments.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawing. Each example is supplied by way of illustration of the invention and shall not be understood as a limitation thereof. For example, the characteristics shown or described insomuch as they are part of one embodiment can be adopted on, or in association with, other embodiments to produce another embodiment.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

With reference to the attached drawings, embodiments described here concern an additive manufacturing device to make three-dimensional objects, indicated generically by reference number 1. The device 1 according to embodiments described here comprises a printer extruder 10 configured to print a filament (not shown in the drawings), and a guide unit 100 configured to translate the extruder along one or more translation axes 150, 250. In other words, the guide unit 100 is configured to confer one or more degrees of freedom in translation to the extruder 10.

In some embodiments, combinable with all the embodiments described here, the printer extruder 10 can be configured to print a filament of thermoplastic material.

In other embodiments, combinable with all the embodiments described here, the printer extruder 10 can be configured to print a filament of composite material. Some examples of composite materials are for example composites with short fibers, that is, in suspension (such as carbon fibers), or with long fibers (such as glass and/or carbon fibers or filaments), or composites with a base of conductor materials formed by a core of conductor material wound in plastic material. An example of an extruder usable to print a filament of composite material in association with the embodiments described here is described in the patent application filed in Italy under n. 102015000037843 (UB2015A0036 87).

The device 1 also comprises a support 12 which defines a support plane for the three-dimensional object. The support 12 is rotatable around a rotation axis 550 substantially orthogonal to the support plane. To this purpose, the device 1 is preferably provided with an actuation unit comprising at least an electric motor connected to the support 12 to induce its rotation.

The device 1 according to embodiments described here provides that the guide unit 100 is configured to rotate the extruder 10 around one or more rotation axes 350, 450. In other words the guide unit 100 also confers on the extruder 10 one or more degrees of freedom in rotation. As will be described in more detail hereafter, the combination of the movements of translation and rotation allowed to the extruder 10 allows to vary the orientation in space of the extruder 10, that is, it allows to deposit filaments along trajectories inclined with respect to the support plane of the three-dimensional object.

According to possible implementations, the extruder 10 can comprise an entrance for a pipe 4 to inject thermoplastic or composite print material, and a head portion (also known as hot end) equipped with an exit section which defines a direction of extrusion 50 of the filament. During the printing process, the head is heated to a predetermined temperature for the exit of thermoplastic or composite material, according to the principles of Fused Deposition Modeling (FDM) technology. We must point out that the variation in the orientation of the extruder 10 in space leads to a corresponding variation in the direction of extrusion 50.

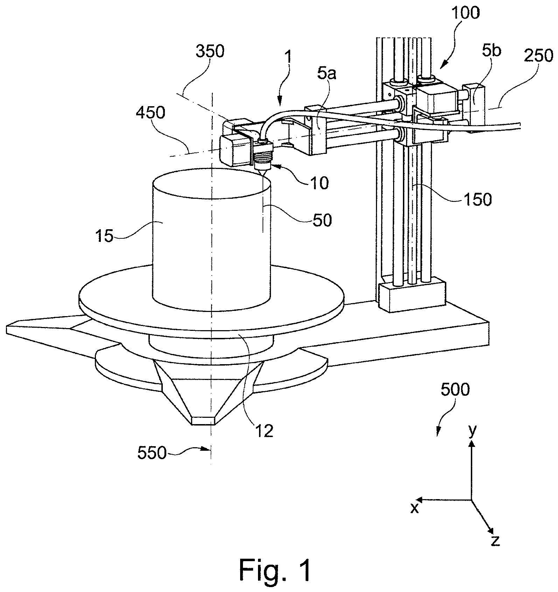

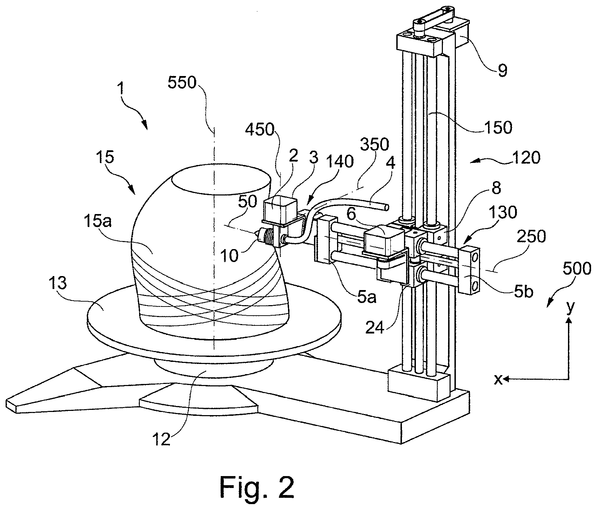

Figs. 1 and 2 concern a possible embodiment of the device 1 according to the present description. The guide unit 100 comprises first movement means 120 to translate the extruder 10 along a first translation axis 150. Such first axis 150 is parallel to the axis y of a reference system 500. Second movement means 130 are provided to translate the extruder 10 along a second translation axis 250, perpendicular to the first axis 150 and parallel to an axis x of the same reference system 500. The guide unit 100 also comprises rotation means 140 to rotate the extruder 10 around at least one first rotation axis 350 which is orthogonal to the plane defined by the axes x and y in the reference system 500.

With reference to fig. 1, the device 1 according to embodiments described here allows a deposition "in parallel layers", according to a known principle. We would observe that in this first operating mode, the head of the extruder 10, and in particular its exit section, faces toward the support plane defined by the support 12. More precisely, the extruder 10 faces in such a way that the direction of extrusion 50 is substantially parallel to the rotation axis 550 of the support 12, that is, orthogonal to the support plane of the object 15. The combination of the movements of translation along the axes 150, 250 with the rotation of the support plane 12, allows to obtain a three-dimensional object 15 in parallel layers, such as for example the cylinder shown in fig. 1.

As indicated above, the rotation means 140 allow the rotation of the extruder 10, that is, the head portion, around at least the first rotation axis 350. This rotation leads to a variation in the orientation of the direction of extrusion 50. Compared with the condition in fig. 1, a rotation of the extruder 10 of 90° in a clockwise direction leads, for example, to the possibility of depositing the filament of thermoplastic or composite material on the side surface 15a of the three-dimensional object 15 previously made "in parallel layers". More precisely, the rotation of the support 12, in combination with the possible translations along the axes 150, 250 allows to deposit the filaments in a substantially "interwoven" disposition, as shown schematically in fig. 2. This type of deposition not only improves the adhesion of the "parallel layers" previously deposited, but also determines a general increase in the mechanical resistance of the object 15. On this point, we would observe that this deposition technique allows to obtain particularly complex forms, with extreme facility and speed.

According to a preferred embodiment, shown in the drawings, the rotation means 140 of the guide unit 100 rotate the extruder 10 also around a second rotation axis 450 which is orthogonal to the first rotation axis 350 defined above. By means of this solution, the guide unit 100 confers in fact no fewer than four degrees of freedom (two translations and two rotations) on the extruder 10, advantageously increasing its functional versatility.

According to one embodiment, the additive manufacturing device 1 according to the present description comprises equipment to rotate the support plane 12 around the axis 550.

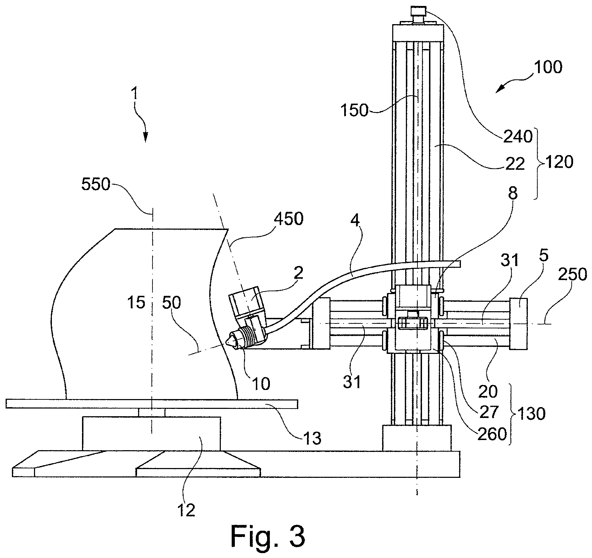

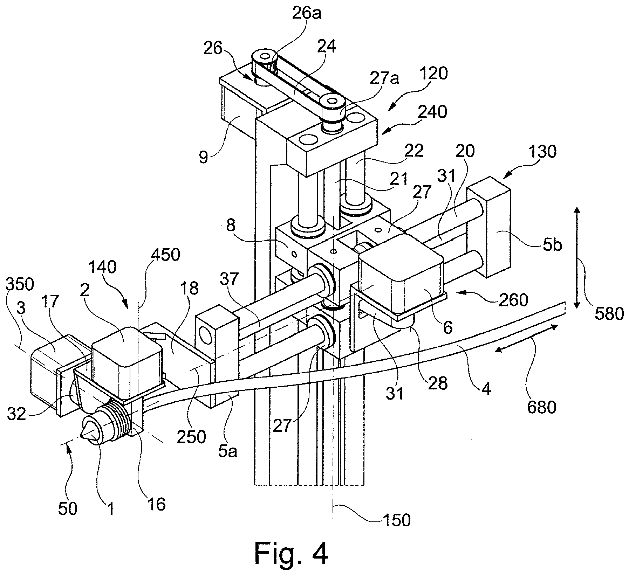

Figs. 3 and 4 show a possible embodiment of the guide unit 100, in particular of the first movement means 120 and the second movement means 130. The first movement means 120 comprise a group of first rectilinear guides 22, parallel to each other, which define the first rotation axis 150. The first movement means 120 also comprise a first support 8, sliding along said first guides 22. The first support 8 is operatively associated with the extruder 10. With the expression "operatively associated" we mean that a translation of the support 8 along the first guides 22 determines a corresponding translation of the extruder 10 in a direction parallel to the first axis 150. The first movement means 120 also comprise a first actuation unit 240 to translate the first support 8 along the first guides 22.

The second movement means 130 comprise a group of second rectilinear guides 20, parallel to each other and substantially orthogonal to the first axis 150.

The second rotation means also comprise a second support 27, integral with the first support 8 of the first movement means 120. The second guides 20 are slidingly coupled with the second support 27, which defines the second translation axis 250. In other words, the group of second guides 20 moves with respect to the second support 27 constrained to the first support 8.

As can easily be seen in fig. 4, the extruder 10 is integral with one end 23 of the group of second guides 20. Therefore, the extruder 10 moves along the first translation axis 250 following a corresponding movement of the group of second guides 20 along the same axis. The second movement means 130 also comprise a second actuation unit 260, configured to translate the group of second guides 20 along the second translation axis 250.

The cited fig. 4 shows in detail a possible embodiment of the first actuation unit 240 and the second actuation unit 260. More specifically, the first actuation unit 240 comprises at least a first motor 9 and a first transmission that connects the first motor 9 to the first support 8, that is, so that a rotation of the first motor 9 determines a corresponding translation of the first support. The second guides 20 are supported at the ends by two supports 5a, 5b.

In detail, the first transmission comprises a first transmission belt 24 and a first command screw 21. The first motor 9 comprises a shaft 26 at the end of which a first pulley 26a is keyed, in which the transmission belt 24 engages. The latter also engages in a second pulley 27a integral with one end of the first screw 21, that is, so that a rotation of the shaft of the first motor 9 determines a corresponding rotation of the first screw 21. The first screw 21 is also operatively connected with the first support 8 so that a rotation of the first screw 21, in response to the actuation of the first motor 9, in turn determines a translation of the first support 8 along the first guides 22.

In a possible embodiment, the first motor 9 is a stepper motor and is configured to impart rotations to the first shaft 26 in a first predetermined direction or a second predetermined direction. In this way, the whole formed by the first support 8, the second support 27, and the group of second guides 20 and the extruder 10 is moved along the first axis 150. In practice, in the embodiment shown in fig. 4, the translation of the extruder 10 along the first axis 150 is determined by a translation along the same axis as the second movement means 130 of the guide unit 100.

The second actuation unit 260 is conceptually similar to the first actuation unit 140, comprising a second motor 6, for example a stepper motor, and a second transmission that connects the second motor 6 to the group of second guides 20. More specifically, the second transmission is such that a rotation of the second motor 6 determines a corresponding translation of the group of second guides 20 along the second translation axis 250.

The second transmission comprises a second transmission belt 31, which engages with a pulley 28 mounted at one end of the shaft of the second motor 6. The belt 31 is constrained at the ends to the two supports 5a and 5b of the second guides 20. In response to the actuation of the second motor 6, the pulley 28 rotates in a predetermined direction, drawing into rotation the second belt 31 which in its turn determines a translation of the group of second guides 20 integral with the second screw, along the second translation axis 250. More precisely, the translation of the group of second guides 20, and consequently of the extruder 10 integral therewith, is obtained in one of the two directions indicated in fig. 4 by reference 680.

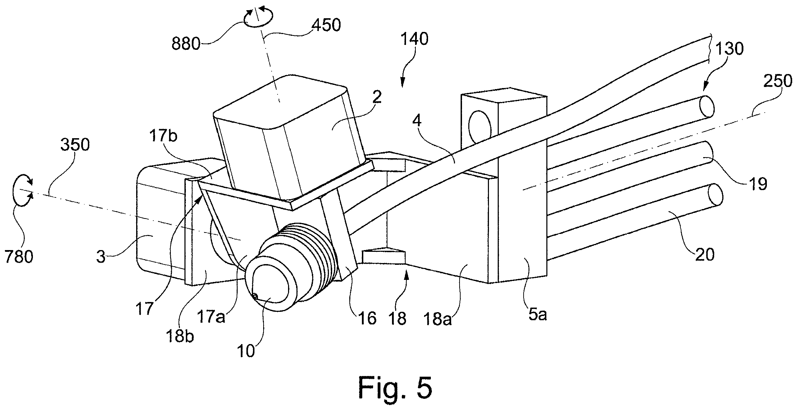

Fig. 5 shows in detail a possible embodiment of the rotation means 140, configured to rotate the extruder 10 around the two rotation axes 350, 450 indicated above. More specifically, the rotation means 140 comprise a first support element 18 integral with the group of second guides 20.

Preferably the first element 18 has a substantially L-shaped conformation and comprises a first side 18a connected to the end 5a of the group of second guides 20. The rotation means 140 also comprise a second support element 17 rotatably connected to the first support element 18 through first connection means that configure the first rotation axis 350. Preferably, the second element 17 also has a substantially L-shaped conformation defined by a first side 17a rotatably connected to a second side 18b of the first element 18.

The rotation means 140 comprise a third motor 3, for example a stepper motor, the shaft of which is operatively connected to the second element 17, so that the rotation of the shaft determines a corresponding rotation of the second support 17 around the first rotation axis 350. In this representation, the shaft of the third motor 3 is preferably coaxial with the first rotation axis 350.

The rotation means 140 comprise second connection means which configure the second rotation axis 450. More precisely, the second connection means connect a connection portion 16 of the extruder 10 to a part of the second element 17. Preferably, the connection portion 16 is connected to a second side 17b of the second element 17 that develops on a plane substantially orthogonal to that on which the first side 17a develops. We would observe that the preferred L-shaped conformation provided for the two support elements 17, 18 advantageously guarantees a wider maneuvering space for the extruder 10, which can easily be rotated by a relatively wide angle, both around axis 350 and also around axis 450.

The rotation means 140 also comprise a fourth motor 2, also preferably of the stepper type. The shaft of the fourth motor 2 is operatively connected to the connection portion 16 of the extruder 10 so as to determine the rotation thereof. To this purpose, the shaft of the fourth motor 2 is preferably coaxial with the second rotation axis 450. Again according to a preferred embodiment, the extruder 10 is also configured so that the direction of extrusion 50 is orthogonal to the second rotation axis 450.

Preferably, the device 1 according to some embodiments comprises a command and control unit equipped with at least a memory and at least a microprocessor unit. The unit is operatively connected to the guide unit 100 and more precisely to the motors 9, 6, 3, 2 of the actuation units 240, 260 and the rotation means 140, in order to control the functioning thereof. The control and command unit is preferably also connected to the actuation unit provided to rotate the support 12. Moreover, the control unit is connected to a system to thrust the thermoplastic or composite material (not shown in the drawings), which will be melted, inside the melting chamber of the extruder 10.

The control unit comprises instructions loaded in the memory and executable by the microprocessor unit to control the actuation of the motors 9, 6, 2, 3. In substance, the control unit translates these instructions into command signals sent to the electric motors 9, 6, 2, 3. Each command determines a translation/rotation of the extruder 10 along/around a corresponding translation/rotation axis.

The instructions are therefore defined as a function of the shape of the three-dimensional object to be obtained. In a possible embodiment, for example, the instructions could be defined to obtain a three-dimensional object through a "parallel layers" deposition. In this hypothesis, the control unit sends command signals mainly to the third motor 3 and the fourth motor 2, following which the extruder 10 will be able to rotate around one or both the rotation axes 350, 450 until the direction of extrusion is parallel to the support plane 12. Subsequently, to obtain the "parallel layers", the control unit will send command signals mainly to the first motor 9 and the second electric motor 6 and to the actuation unit of the support 12 to obtain the movement of the extruder 10 along the two translation axes 150, 250 and around the rotation axis 550. The control system simultaneously provides to command the unit that thrusts the thermoplastic or composite material.

In another case, the instructions could be defined to obtain an "interwoven" deposition of the filaments according to the principles already set forth above. In this second hypothesis the control unit will send signals to the electric motors 2, 3 provided to rotate the extruder 10 around the axes 350, 450 to vary the direction of extrusion 50 of the filaments. These commands can be simultaneous with others sent to the electric motors 6, 9 of the actuation units 240, 260 to determine corresponding translations of the extruder 10 along the axes 150, 250 and to the actuation unit of the support 12 to determine rotations around the axis 550. All in all, the command signals sent to the electric motors will determine the development of the trajectory during the additive printing process. The control system simultaneously provides to command the unit to thrust the thermoplastic or composite material.

The present description also concerns a new additive manufacturing method to obtain a three-dimensional object with a predetermined shape. The method can be actuated using a device 1 as described above and comprises the steps of:
a) providing a central portion of the three-dimensional object by overlapping parallel layers of extruded material;
b) providing at least a side portion of the three-dimensional object by overlapping interwoven layers of extruded material on a side surface of the central portion.

In substance, the method according to embodiments described here provides to obtain at least a first deposition in "parallel layers" and a subsequent deposition in "interwoven layers". By the expression "parallel layers" we mean to indicate overlapping layers substantially parallel to the support plane of the three-dimensional object. By the expression "interwoven layers" we mean to indicate overlapping layers so that two adjacent layers are substantially staggered, thus defining a substantially "interwoven" structure.

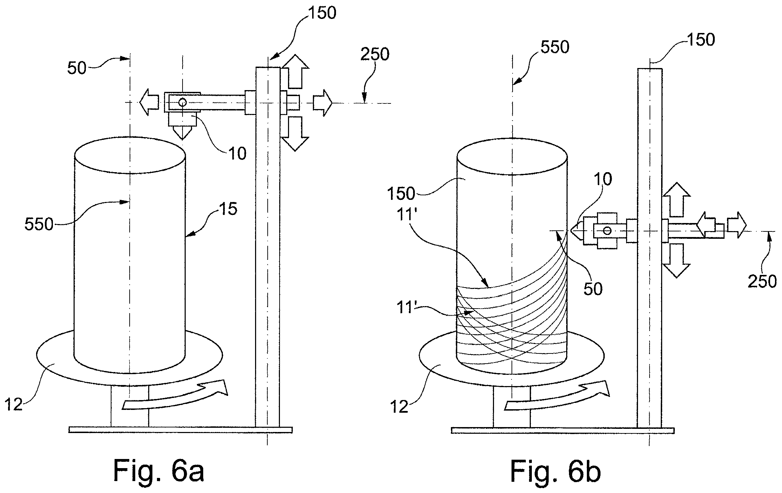

Figs. 6a and 6b are schematizations referring to the two steps a) and b) as indicated above. Fig. 6a shows schematically the device 1 according to embodiments described here during the making of a central portion (hereafter referred to as "core") with a substantially cylindrical shape (step a). We would point out that during this step the extruder 10 is oriented so that the direction of extrusion 50 is substantially parallel to the rotation axis 550 of the support 12. Again during step a), the support 12 rotates around the axis 550 and the extruder 10 will be translated along axes 150, 250.

Fig. 6b shows schematically the device 1 during a deposition with "interwoven layers". In this step the extruder 10 is inclined with respect to the rotation axis 550 of the support 12. By the term "inclined", we mean that the direction of extrusion 50 is not parallel to the rotation axis 550. Step b) provides to rotate and/or translate the extruder 10 so as to define overlapping layers of material starting from a side surface 15a of the three-dimensional object.

In the case shown, the extruder 10 is oriented so that the direction of extrusion 50 is, for example, orthogonal to the rotation axis 550 of the support 12. According to a possible form of actuation, a first inclined layer is made on the side surface 12a of the cylindrical core the extruder 10 is translated along the first translation axis 150, keeping the position constant along the second axis 250. In this way the filament of material (indicated by the reference number 11') is deposited around the side surface 15 with a spiral development. A second inclined layer can be made, for example, by varying first the direction of rotation of the first support 12 and the position of the extruder 10 along the second axis 250. Subsequently, the extruder 10 can be again translated along the first axis 150 to obtain a layer in which the filaments (indicated by the reference number 11") are wound in a spiral on the cylindrical surface 15a, but in an opposite direction to those (11') of the first layer deposited before. In this way an interwoven structure can be obtained, which considerably increases the mechanical resistance of the three-dimensional object.

This form of actuation of the method as described is to be considered an example and for this reason not restrictive. In other words, to obtain a deposition with inclined/interwoven layers the extruder 10 can be moved/oriented to follow the most suitable trajectories depending on the predetermined shape of the three-dimensional object. To this purpose, the degrees of freedom in translation and rotation conferred on the device 1 according to embodiments described here allow maximum versatility.

## Claims

1. An additive manufacturing device (1) to obtain a three-dimensional object, said device (1) comprising:
- a printer extruder (10) configured to print a filament,
- a guide unit (100) configured to translate said extruder (10) along one or more reference axes (150, 250),
- a support (12) which defines a support plane for said three-dimensional object, said support (12) being rotatable around a rotation axis (550) substantially orthogonal to said support plane; wherein said guide unit (100) is further configured to rotate said extruder (10) around one or more rotation axes (350, 450), **characterized in that** said guide unit (100) comprises rotation means (140) configured to rotate said extruder (10) around at least a first rotation axis (350) substantially orthogonal to a reference plane (x-y) defined by two axes (x, y), each parallel to one of said translation axes (150, 250), said rotation means (140) also being configured to rotate said extruder (10) around a second rotation axis (450) substantially orthogonal to said first rotation axis (350),
wherein said rotation means (140) comprise:
- a first support element (18) integral with a group of second guides (20);
- a second support element (17) rotatably connected to said first support element (18) through first connection means which define said first rotation axis (350), said extruder (10) being operatively connected to said second support element (17);
- an electric motor (3) operatively connected to said second support element (17) so that a rotation of said electric motor (3) determines a corresponding rotation of said second support (17) around said first rotation axis (350),
further wherein said rotation means (140) comprise second connection means which rotatably connect a connection portion (16) of said extruder (10) to said second support element (17), thus defining said second rotation axis (450), said rotation means (140) comprising a further electric motor (2) operatively connected to said connection portion (16) of said extruder (10), so that a rotation of said further electric motor (2) determines a corresponding rotation of said extruder (10) around said second rotation axis (450).

2. Device (1) as in claim 1, wherein said guide unit (100) comprises first movement means (120) configured to translate said extruder (10) along a first translation axis (150) and second movement means (130) to translate said extruder (10) along a second translation axis (250), substantially perpendicular to said first axis (150).

3. Device (1) as in claim 1 or 2, wherein said first movement means (120) comprise:
- a group of first rectilinear guides (22) which define said first translation axis (150);
- a first support (8) sliding along said first guides (22), said first support being operatively associated with said extruder (10) so that a translation of said first support (8) along said first guides (22) determines a corresponding translation of said extruder (10) parallel to said first translation axis (150);
- a first operating unit (240) configured to translate said first support (8) along said first guides (22), said first operating unit (240) comprising at least a first motor (9) and a first transmission which connects said first motor (9) to said first support so that a rotation of said first motor (9) determines a translation of said first support (8) along said first guides (22).

4. Device (1) as in claim 3, wherein said second movement means (130) comprise:
- a second support (27) which is integral with said first support (8), which defines said second translation axis (250);
- the group of second guides (20) being slidingly coupled to said second support (27), said group of second guides (20) being operatively associated with said extruder (10) so that a translation of said group of second guides (20) with respect to said second support (27) determines a corresponding translation of said extruder (10) parallel to said second translation axis (250);
- a second operating unit (260) configured to translate said group of second guides (20) with respect to said second support (27), said second operating unit (260) comprising at least a second motor (6) and a second transmission which connects said second motor (6) to said group of second guides (20) so that a rotation of said second motor (6) determines a translation of said group of second guides (20) along said first guides (22).

5. Device (1) as in any claim hereinbefore, comprising a control and command unit of said guide unit (100), said control and command unit comprising at least one storage unit and at least one microprocessor unit, said unit comprising instructions loaded in said storage unit and executable by said microprocessor unit to control said guide unit (100).

6. An additive manufacturing method to obtain a three-dimensional object of predetermined shape using a device as in any one of the claims from 1 to 5, wherein said method comprises the steps of:
a) providing a central portion of said three-dimensional object by overlapping layers of extruded material;
b) providing a side portion of said three-dimensional object by depositing overlapped interwoven layers on a side surface of said central portion.

7. Method as in claim 6, said method providing to make available a print extruder (10) configured to print a filament,
wherein step a) provides to translate the extruder (10) along one or more reference axes (150, 250) by means of a guide unit (100) and to rotate a support (12), which defines a support plane for said three-dimensional object, around a rotation axis (550) substantially orthogonal to said support plane,
and wherein step b) provides to rotate said extruder (10) by means of said guide unit (100) around at least a first rotation axis (350) substantially orthogonal to a reference plane (x-y) defined by two axes (x, y) each parallel to one of said translation axes (150, 250) and around a second rotation axis (450) substantially orthogonal to said first rotation axis (350).

## Patentansprüche

1. Additivherstellungsvorrichtung (1), um ein dreidimensionales Objekt zu erhalten, wobei die Vorrichtung (1) umfasst:
- einen Druckerextruder (10), der ausgelegt ist, ein Filament zu drucken,
- eine Führungseinheit (100), die ausgelegt ist, den Extruder (10) entlang einer oder mehrerer Referenzachsen (150, 250) translatorisch zu verschieben,
- einen Träger (12), der eine Trägerebene für das dreidimensionale Objekt definiert,
wobei der Träger (12) um eine Drehachse (550) im Wesentlichen orthogonal zur Trägerebene drehbar ist;
wobei die Führungseinheit (100) ferner ausgelegt ist, den Extruder (10) um eine oder mehrere Drehachsen (350, 450) zu drehen,
**dadurch gekennzeichnet, dass** die Führungseinheit (100) Drehmittel (140) umfasst, die ausgelegt sind, den Extruder (10) um mindestens eine erste Drehachse (350) im Wesentlichen orthogonal zu einer Referenzebene (x-y) zu drehen, die von zwei Achsen (x, y) definiert wird, jeweils parallel zu den Translationsachsen (150, 250), wobei die Drehmittel (140) auch ausgelegt sind, den Extruder (10) um eine zweite Drehachse (450) im Wesentlichen orthogonal zur ersten Drehachse (350) zu drehen,
wobei die Drehmittel (140) umfassen:
- ein erstes Trägerelement (18) integral mit einer Gruppe zweiter Führungen (20);
- ein zweites Trägerelement (17), das drehbar mit dem ersten Trägerelement (18) durch erste Verbindungsmittel verbunden ist, welche die erste Drehachse (350) definieren, wobei der Extruder (10) mit dem zweiten Trägerelement (17) betreibbar verbunden ist;
- einen Elektromotor (3), der mit dem zweiten Trägerelement (17) betreibbar derart verbunden ist, dass eine Drehung des Elektromotors (3) eine entsprechende Drehung des zweiten Trägers (17) um die erste Drehachse (350) bestimmt,
wobei ferner die Drehmittel (140) zweite Verbindungsmittel umfassen, die einen Verbindungsabschnitt (16) des Extruders (10) mit dem zweiten Trägerelement (17) drehbar verbinden, wodurch die zweite Drehachse (450) definiert wird, wobei die Drehmittel (140) einen weiteren Elektromotor (2) umfassen, der mit dem Verbindungsabschnitt (16) des Extruders (10) betreibbar derart verbunden ist, dass eine Drehung des weiteren Elektromotors (2) eine entsprechende Drehung des Extruders (10) um die zweite Drehachse (450) bestimmt.

2. Vorrichtung (1) nach Anspruch 1, wobei die Führungseinheit (100) erste Bewegungsmittel (120), die ausgelegt sind, den Extruder (10) entlang einer ersten Translationsachse (150) translatorisch zu verschieben, und zweite Bewegungsmittel (130), um den Extruder (10) entlang einer zweiten Translationsachse (250) im Wesentlichen rechtwinklig zur ersten Achse (150) translatorisch zu verschieben, umfasst.

3. Vorrichtung (1) nach Anspruch 1 oder 2, wobei die ersten Bewegungsmittel (120) umfassen:
- eine Gruppe erster geradliniger Führungen (22), welche die erste Translationsachse (150) definieren;
- einen ersten Träger (8), der entlang der ersten Führungen (22) gleitet, wobei der erste Träger mit dem Extruder (10) betreibbar verbunden ist, so dass eine Translation des ersten Trägers (8) entlang der ersten Führungen (22) eine entsprechende Translation des Extruders (10) parallel zur ersten Translationsachse (150) bestimmt;
- eine erste Betriebseinheit (240), die ausgelegt ist, den ersten Träger (8) entlang der ersten Führungen (22) translatorisch zu verschieben, wobei die erste Betriebseinheit (240) mindestens einen ersten Motor (9) und ein erstes Getriebe umfasst, das den ersten Motor (9) mit dem ersten Träger verbindet, so dass eine Drehung des ersten Motors (9) eine Translation des ersten Trägers (8) entlang der ersten Führungen (22) bestimmt.

4. Vorrichtung (1) nach Anspruch 3, wobei die zweiten Bewegungsmittel (130) umfassen:
- einen zweiten Träger (27), der integral mit dem ersten Träger (8) ist, und der die zweite Translationsachse (250) definiert;
- wobei die Gruppe zweiter Führungen (20) gleitbar mit dem zweiten Träger (27) gekoppelt ist,
wobei die Gruppe zweiter Führungen (20) mit dem Extruder (10) betreibbar verbunden ist, so dass eine Translation der Gruppe zweiter Führungen (20) in Bezug auf den zweiten Träger (27) eine entsprechende Translation des Extruders (10) parallel zur zweiten Translationsachse (250) bestimmt;
- eine zweite Betriebseinheit (260), die ausgelegt ist, die Gruppe zweiter Führungen (20) in Bezug auf den zweiten Träger (27) translatorisch zu verschieben, wobei die zweite Betriebseinheit (260) mindestens einen zweiten Motor (6) und ein zweites Getriebe umfasst, das den zweiten Motor (6) mit der Gruppe zweiter Führungen (20) verbindet, so dass eine Drehung des zweiten Motors (6) eine Translation der Gruppe zweiter Führungen (20) entlang der ersten Führungen (22) bestimmt.

5. Vorrichtung (1) nach einem der vorhergehenden Ansprüche, umfassend eine Steuer- und Befehlseinheit der Führungseinheit (100), wobei die Steuer- und Befehlseinheit mindestens eine Speichereinheit und mindestens eine Mikroprozessoreinheit umfasst, wobei die Einheit Instruktionen umfasst, die in die Speichereinheit geladen werden und von der Mikroprozessoreinheit ausgeführt werden können, um die Führungseinheit (100) zu steuern.

6. Additivherstellungsverfahren, um ein dreidimensionales Objekt mit einer vorherbestimmten Form unter Verwendung einer Vorrichtung nach einem der Ansprüche 1 bis 5 zu erhalten, wobei das Verfahren die Schritte umfasst:
a) Bereitstellen eines zentralen Abschnitts des dreidimensionalen Objekts durch überlappende Schichten aus extrudiertem Material;
b) Bereitstellen eines seitlichen Abschnitts des dreidimensionalen Objekts durch Abscheiden überlappender miteinander verwobener Schichten auf einer Seitenfläche des zentralen Abschnitts.

7. Verfahren nach Anspruch 6, wobei das Verfahren vorsieht, einen Druckextruder (10) zur Verfügung zu stellen, der ausgelegt ist, ein Filament zu drucken,
wobei Schritt a) vorsieht, den Extruder (10) entlang einer oder mehrerer Referenzachsen (150, 250) mittels einer Führungseinheit (100) translatorisch zu verschieben, und einen Träger (12), der eine Trägerebene für das dreidimensionale Objekt definiert, um eine Drehachse (550) im Wesentlichen orthogonal zur Trägerebene zu drehen,
und wobei Schritt b) vorsieht, den Extruder (10) mittels der Führungseinheit (100) um mindestens eine erste Drehachse (350) im Wesentlichen orthogonal zu einer Referenzebene (x-y), die von zwei Achsen (x, y) definiert wird, jeweils parallel zu einer der Translationsachsen (150, 250), und um eine zweite Drehachse (450) im Wesentlichen orthogonal zur ersten Drehachse (350) zu drehen.

## Revendications

1. Dispositif de fabrication additive (1) pour obtenir un objet en trois dimensions,
ledit dispositif (1) comprenant :
- une extrudeuse d'impression (10) configurée pour imprimer un filament,
- une unité de guidage (100) configurée pour déplacer en translation ladite extrudeuse (10) le long d'un ou plusieurs axes de référence (150, 250),
- un support (12) qui définit un plan de support pour ledit objet tridimensionnel, ledit support (12) pouvant tourner autour d'un axe de rotation (550) sensiblement orthogonal audit plan de support ;
dans lequel
ladite unité de guidage (100) est en outre configurée pour faire tourner ladite extrudeuse (10) autour d'un ou plusieurs axes de rotation (350, 450), **caractérisé en ce que** ladite unité de guidage (100) comprend des moyens de rotation (140) configurés pour faire tourner ladite extrudeuse (10) autour d'au moins un premier axe de rotation (350) sensiblement orthogonal à un plan de référence (x-y) défini par deux axes (x, y), chacun parallèle à l'un desdits axes de translation (150, 250), lesdits moyens de rotation (140) étant également configurés pour faire tourner ladite extrudeuse (10) autour d'un second axe de rotation (450) sensiblement orthogonal audit premier axe de rotation (350),
dans lequel lesdits moyens de rotation (140) comprennent :
- un premier élément de support (18) d'un seul tenant avec un groupe de seconds guides (20) ;
- un second élément de support (17) relié de manière rotative audit premier élément de support (18) par l'intermédiaire de premiers moyens de connexion qui définissent ledit premier axe de rotation (350), ladite extrudeuse (10) étant connectée de manière opérationnelle audit second élément de support (17)
- un moteur électrique (3) connecté de manière opérationnelle audit second élément de support (17) de sorte qu'une rotation dudit moteur électrique (3) détermine une rotation correspondante dudit second support (17) autour dudit premier axe de rotation (350),
dans lequel en outre lesdits moyens de rotation (140) comprennent des seconds moyens de connexion qui connectent de manière rotative une partie de connexion (16) de ladite extrudeuse (10) audit second élément de support (17), en définissant ainsi ledit second axe de rotation (450), lesdits moyens de rotation (140) comprenant un moteur électrique supplémentaire (2) connecté de manière opérationnelle à ladite partie de connexion (16) de ladite extrudeuse (10), de sorte qu'une rotation dudit moteur électrique supplémentaire (2) détermine une rotation correspondante de ladite extrudeuse (10) autour dudit second axe de rotation (450).

2. Dispositif (1) selon la revendication 1, dans lequel ladite unité de guidage (100) comprend des premiers moyens de déplacement (120) configurés pour déplacer ladite extrudeuse (10) en translation le long d'un premier axe de translation (150) et des seconds moyens de déplacement (130) pour déplacer ladite extrudeuse (10) en translation le long d'un second axe de translation (250) sensiblement perpendiculaire audit premier axe (150).

3. Dispositif (1) selon la revendication 1 ou 2, dans lequel lesdits premiers moyens de déplacement (120) comprennent :
- un groupe de premiers guides rectilignes (22) qui définissent ledit premier axe de translation (150) ;
- un premier support (8) coulissant le long desdits premiers guides (22), ledit premier support étant associé de manière opérationnelle à ladite extrudeuse (10) de sorte qu'un déplacement en translation dudit premier support (8) le long desdits premiers guides (22) détermine un déplacement en translation correspondant de ladite extrudeuse (10) parallèle audit premier axe de translation (150) ;
- une première unité d'actionnement (240) configurée pour déplacer en translation ledit premier support (8) le long desdits premiers guides (22), ladite première unité d'opération (240) comprenant au moins un premier moteur (9) et une première transmission qui relie ledit premier moteur (9) audit premier support de sorte qu'une rotation dudit premier moteur (9) détermine un déplacement en translation dudit premier support (8) le long desdits premiers guides (22).

4. Dispositif (1) selon la revendication 3, dans lequel lesdits seconds moyens de déplacement (130) comprennent :
- un second support (27) qui est d'un seul tenant avec ledit premier support (8), qui définit ledit second axe de translation (250) ;
- le groupe de second guides (20) étant couplé de manière coulissante audit second support (27),
ledit groupe de seconds guides (20) étant associé de manière opérationnelle à ladite extrudeuse (10) de sorte qu'un déplacement en translation dudit groupe de seconds guides (20) par rapport audit second support (27) détermine un déplacement en translation correspondant de ladite extrudeuse (10) parallèle audit second axe de translation (250) ;
- une seconde unité d'actionnement (260) configurée pour déplacer en translation ledit groupe de seconds guides (20) par rapport audit second support (27), ladite seconde unité d'actionnement (260) comprenant au moins un second moteur (6) et une seconde transmission qui relie ledit second moteur (6) audit groupe de seconds guides (20) de sorte qu'une rotation dudit second moteur (6) détermine un déplacement en translation dudit groupe de seconds guides (20) le long desdits premiers guides (22).

5. Dispositif (1) selon l'une quelconque des revendications précédentes, comprenant une unité de contrôle et de commande de ladite unité de guidage (100), ladite unité de contrôle et de commande comprenant au moins une unité de stockage et au moins une unité de microprocesseur, ladite unité comprenant des instructions chargées dans ladite unité de stockage et exécutables par ladite unité de microprocesseur pour contrôler ladite unité de guidage (100).

6. Méthode de fabrication additive pour obtenir un objet tridimensionnel de forme prédéterminée en utilisant un dispositif tel que décrit dans l'une quelconque des revendications 1 à 5, dans lequel ladite méthode comprend les étapes consistant à :
a) fournir une partie centrale dudit objet tridimensionnel en superposant des couches de matériau extrudé ;
b) fournir une partie latérale dudit objet tridimensionnel en déposant des couches entrelacées superposées sur une surface latérale de ladite partie centrale.

7. Méthode selon la revendication 6, ladite méthode permettant de mettre à disposition une extrudeuse d'impression (10) configurée pour imprimer un filament,
dans lequel l'étape a) consiste à déplacer l'extrudeuse (10) en translation le long d'un ou de plusieurs axes de référence (150, 250) au moyen d'une unité de guidage (100) et à faire tourner un support (12) définissant un plan de support pour ledit objet tridimensionnel, autour d'un axe de rotation (550) sensiblement orthogonal audit plan de support, et
dans lequel l'étape b) consiste à faire tourner ladite extrudeuse (10) au moyen de ladite unité de guidage (100) autour d'au moins un premier axe de rotation (350) sensiblement orthogonal à un plan de référence (x-y) défini par deux axes (x, y) chacun parallèle à l'un desdits axes de translation (150, 250) et autour d'un second axe de rotation (450) sensiblement orthogonal audit premier axe de rotation (350).
